# EUROPEAN PATENT APPLICATION

(11) **EP 1 959 417 A1**
(43) Date of publication of application: **20.08.2008**
(21) Application number: 06823539.9
(22) Date of filing: 01.12.2006
(51) Int. Cl.: G09F 9/00, G02F 1/1333

(54) **DISPLAY AND METHOD FOR MANUFACTURING DISPLAY**

(30) Priority: 05.12.2005 JP 2005350902
(71) Applicant: Seiko Instruments Inc., Chiba-shi, Chiba 261-8507 (JP)
(72) Inventor: MATSUHIRA, Tsutomu, Chiba-shi, Chiba 261-8507 (JP)
(74) Representative: Cloughley, Peter Andrew
(86) International application number: PCT/JP2006/324060
(87) International publication number: WO 2007/066590

(57) **Abstract**

A display apparatus is provided in which a transparent cover plate or a touch panel is bonded to a liquid crystal display device in a full-surface contact manner and which is free from unevenness in displayed colors and peeling. The transparent cover plate or touch panel and the liquid crystal display device are bonded with an optical adhesive, which is set to a Shore A hardness of 1 or more to 30 or less. The thickness of the adhesive layer is set to 30 to 200 µm.

## Description

### BACKGROUND OF THE INVENTION

### 1. Field of the Invention

The present invention relates to a display apparatus in which a transparent member and a display device are bonded together with a liquid adhesive in a full-surface contact manner. For example, the present invention relates to bonding a transparent cover plate such as an acrylic plate or a polycarbonate plate, or a touch panel having a glass-glass, film-glass, or film-film structure such as an analog resistive film touch panel, a digital resistive film touch panel, a capacitive (CAP) touch panel, or a surface acoustic wave (SAW) touch panel, to a display device such as a liquid crystal display device, a plasma display, an organic EL display, an inorganic EL display, or an FED in display apparatuses including PDAs and cellular phones.

### 2. Description of the Related Art

A common conventional way to fix a transparent touch panel to a display device is to place a double-sided adhesive cushion with a thickness of 0.3 to 1 mm on the perimeter of the display device. Another way is to bond the touch panel to the display device with an optical adhesive in a full-surface contact manner. The full-surface contact bonding replaces an air layer between the display device and the touch panel or a cover plate with the optical adhesive, thereby reducing reflection at an interface with the air layer and improving the image quality. Desirably, the optical adhesive has a refractive index approximately equal to that of the touch panel or cover plate. JP 07-114010 A (hereinafter referred to as Patent Document 1) discloses a bonding method using a liquid optical adhesive in which the adhesive is applied to the display device to a thickness of about 1 mm and then the display device is bonded to the cover plate in vacuum. The adhesive may instead be in a gel state or a rubber-like state. Another bonding method using a liquid adhesive is disclosed in, for example, JP 09-274536 A (hereinafter referred to as Patent Document 2), where the display device and the touch panel are bonded together in the air such that air bubbles are not formed.

Some bonding methods use a transparent adhesive sheet in place of a liquid adhesive. JP 06-75210 A (hereinafter referred to as Patent Document 3) , for example, discloses a bonding method in which a volatile solvent and a 0.2 mm-thick adhesive sheet are used to laminate the touch panel and the display device in a manner that avoids trapping air bubbles between the bonding surfaces. A transparent adhesive sheet that has repairability and shock-absorbing properties is used in a method disclosed in, for example, JP 2004-101636 A (hereinafter referred to as Patent Document 4), where the cover plate and the display device are bonded with a three-layer transparent adhesive sheet obtained by sandwiching a 3 mm-thick silicone gel layer between silicone rubber layers with a thickness of 0.1 mm each.

In cellular phones, a transparent cover plate is overlaid on a display device, and a non-transparent area is formed by printing or the like in a part of the transparent cover plate that is outside a display area. An elastic member which is formed from rubber or the like to a thickness of 0.3 to 0.5 mm in the perimeter of the display area is interposed between the display device and the transparent cover plate. Recently, however, demand has been growing for thinner models in which the gap between the transparent cover plate and the display device is reduced.

Employed as the transparent cover plate is an acrylic, polycarbonate or other transparent plastic material, or glass. The transparent cover plate is, in some cases, covered with a low reflective film made up of layers of materials to vary the refractive index in stages, with an electromagnetic shield formed of copper, aluminum, or the like and forming a grid-like etching pattern, or with a hard coat for preventing scratches. In the case of a glass cover plate, a film sheet for preventing cracking, a film sheet subjected to anti-glare treatment to prevent specular reflection, or the like is stuck over the glass surface. Variations of the touch panel include resistive panels (analog resistive film type and digital resistive film type), capacitive (CAP) panels, and surface acoustic wave (SAW) panels. Substrates employed for the touch panel are glass substrates, polycarbonate substrates, and acrylic substrates.

Liquid crystal display elements are frequently employed as a display device of a cellular phone. Liquid crystal display devices display images and the like by applying a voltage to a liquid crystal layer sandwiched between two glass substrates. A bare chip IC serves as a driver for applying the voltage. The bare chip IC is mounted face down directly to the glass substrate (COGmounting) by connecting a gold bump in an electrode of the bare chip IC and an electrode of the glass substrate with an anisotropic conductive film.

In cellular phones, the cover plate and the display device are bonded together because of the demand for thinness and improved visibility. When a normal lamination method is used to bond an acrylic plate having a thickness of 1.5 mm to a liquid crystal display device with a transparent adhesive sheet having a thickness of 100 µm, air bubbles are often trapped between the bonding faces. The glass substrate of the display device to which a driver IC is mounted by COG is warped by about 20 µm, which increases the chance of trapping air bubbles particularly on the IC side. In the case where a volatile solvent is employed in bonding a cover plate and a liquid crystal display device with a transparent adhesive sheet, there are initially no air bubbles, but detachment of the cover plate and the liquid crystal display device from each other in a 60°C environment test causes air bubbles, particularly on the IC side, as is the case for the normal lamination method. It is very difficult to bond a 1.5 mm-thick acrylic plate to a warped display device by adhesion. An adhesive sheet obtained by bonding a silicone sheet and a silicone gel layer together is difficult to reduce its thickness. Also, having high repairability, a silicone sheet is easily peeled by an external force. A transparent liquid adhesive is therefore preferred in bonding a display device and a cover plate together. However, bonding a liquid crystal display device and a cover plate with a transparent liquid adhesive has the following problems.

High temperature causes a polarizing plate of the liquid crystal display device to shrink in a stretching axis direction. The uniformity of gaps between liquid crystal molecules is therefore lost in an environment test, making images and the like that are displayedlookuneven. Also, the liquid crystal display device peels at the interface between the polarizing plate and the liquid adhesive.

A level difference in the perimeter of the display device which is created by the polarizing plate makes the thicknesses of the adhesive layer in the level difference portion differ from the one on the polarizing plate. Shrinkage stress generated as the liquid adhesive cures is therefore larger in the level difference portion and changes the gaps in the liquid crystal layer, resulting in unevenness in displayed images and the like.

The gaps between liquid crystal molecules are also changed by a pushing pressure from the cover plate, and the change causes great unevenness in displayed images and the like particularly in an area near the perimeter of the display screen.

The liquid adhesive bonding the liquid crystal display device and the cover plate sometimes protrudes past the perimeter of the liquid crystal display device such that the liquid crystal display device cannot be housed in a plastic frame.

An electrode formed in the perimeter of the touch panel blocks light. In an acrylic plate, too, a member is formed by printing in the perimeter of the display area. The transparent adhesive under this electrode portion or printed member receives little light and, in the case of a photo-curing adhesive, is lower in curing ratio than the transparent adhesive in the display area, at 30% or less. The transparent adhesive under the electrode portion or the printed member continues to cure gradually even after light irradiation is finished, thus generating curing shrinkage stress, which changes the gaps between liquid crystal molecules and makes displayed images and the like look uneven. This unevenness in displayed images and the like occurs a few days later in most cases.

### SUMMARY OF THE INVENTION

The present invention has been made in view of the above-mentioned problems, and therefore has an object to provide a liquid crystal display device integrated with a cover plate or a touch panel that is reliable in terms of less unevenness in displayed images and the like and no peeling, that has substantially no fear of an adhesive protruding from its designated space, and that can be reduced in size.

To attain the object, the present invention sets the hardness of a transparent adhesive measured after curing by a Shore A hardness test to 1 or more and 30 or less in a display apparatus in which the transparent adhesive adheres a transparent member such as a glass plate, a transparent plastic plate, or a touch panel to a displaydevice. The transparent adhesive in a liquid state is applied to at least one of the transparent member and the display device to bond the entire area including a display screen. The transparent adhesive should be soft in terms of adaptation to the shrinkage of a polarizing plate from heat, and in terms of curing shrinkage stress in a level difference portion. However, since an external force can cause the transparent adhesive to peel at a Shore A hardness of 0, the transparent adhesive needs to be 1 or higher in Shore A hardness. Unevenness in displayed images and the like due to the pushing pressure increases particularly when the Shore A hardness exceeds 30 or so, irrespective of the thickness of the transparent adhesive layer. Therefore, the Shore A hardness of the transparent adhesive is preferably 30 or less.

When the transparent adhesive layer is thicker than 200 µm, the adhesive protrudes to an extent of 0.3 mm or more. Therefore, the thickness of the transparent adhesive layer should be 200 µm or less. When the transparent adhesive layer is thinner than 30 µm, thermal stress causes the adhesive to peel from the polarizing plate. The appropriate thickness of the adhesive layer is therefore 30 to 200 µm.

The transparent adhesive cures at different curing ratios in the display portion (transparent portion) and the non-transparent portion such as the electrode portion of a touch panel or the area of the printed member in an acrylic plate. The curing ratio of the transparent adhesive in the non-transparent portion is set to 70% or higher. This is accomplished by employing a photo-curing transparent adhesive as the transparent adhesive, curing the adhesive in the transparent portion with the use of light cast through the transparent member, and curing the adhesive in the non-transparent portion such as the printed portion with the use of light cast directly from a side.

### BRIEF DESCRIPTION OF THE DRAWINGS

In the accompanying drawings:
FIG. 1 is a side view of a transparent cover plate;
FIG. 2 is a side view schematically showing a structure of a liquid crystal display device; and
FIG. 3 is a side view schematically showing a structure of a display apparatus according to the present invention.

### DETAILED DESCRIPTION OF THE PREFERRED EMBODIMENTS

According to the present invention, a display apparatus includes a transparent member, and a display device having a display portion, which are bonded to each other with a transparent adhesive, in which the transparent adhesive after curing has a Shore A hardness of 1 to 30. Further, the transparent adhesive in the display portion is 30 to 200 µm in thickness.

Still further, the transparent member is formed with a printed member that blocks light in a perimeter of the transparent member, the transparent adhesive is a photo-curing adhesive, and the photo-curing transparent adhesive cures at different curing ratios in an area of the display portion and an area of the printed member, and the curing ratio in the area of the printed member is 70% or higher. In this case, the curing ratio of the photo-curing transparent adhesive in the area of the display portion, namely the display screen area, is set to 85% or higher.

The transparent member is a transparent cover plate made from a chemically reinforced glass plate with a thickness of 1.0 mm. The display device is a liquid crystal display device. The transparent adhesive layer is about 100 µm in thickness in the display portion. After curing, the transparent adhesive has a Shore A hardness of 10 or less, desirably a Shore A hardness of about 1 to 3. The curing ratio of the transparent adhesive is 85% or higher in the screen area, and 70% or higher in the area of the printed member of the transparent cover plate.

According to the present invention, a method of manufacturing a display apparatus includes: applying a photo-curing transparent adhesive to at least one of a transparent member and a display device, the transparent member having, on a perimeter thereof, one of a printed member which blocks light and a wiring line; aligning the transparent member and the display device with respect to each other and bonding the transparent member and the display device; and curing the photo-curing transparent adhesive in a transparent portion of the transparent member with light that is transmitted through the transparent member, and curing the photo-curing transparent adhesive in the one of the printed member and the wiring line in the perimeter of the transparent member with light that is cast from a side of the transparent member.

### Embodiment 1

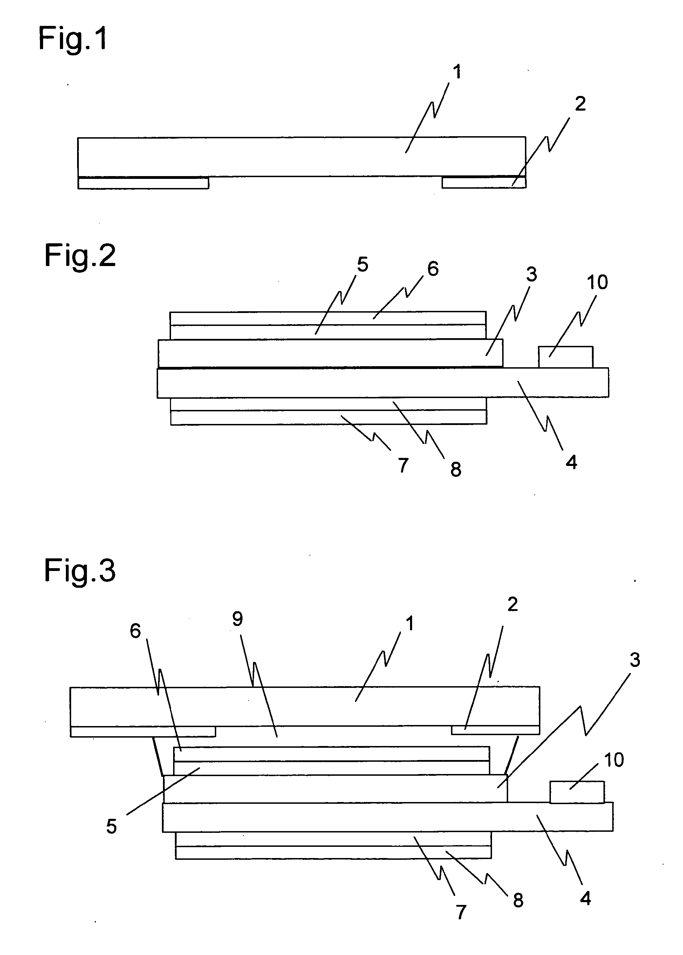

An embodiment of the present invention is described below with reference to the accompanying drawings. FIG. 1 is a side view of a transparent cover plate. The transparent cover plate is denoted by 1 and is made of chemically reinforced soda glass. On a rear surface of the transparent cover plate 1, in an area that falls on the perimeter of a display portion, black ink 2 is applied by printing. The transparent cover plate 1 is 1.5 mm in thickness and the layer of the ink 2 is about 12 µm in thickness. A metal thin film may be formed between the glass and the print. FIG. 2 is a side view of a liquid crystal display device. A glass substrate 4 on which TFT elements are formed and which has a thickness of 0. 25 mm and a glass substrate 3 on which a color filter and an electrode are formed face each other across a gap where a liquid crystal is placed. A phase difference correction film 5 and a polarizing film 6 are attached to the display side of the liquid crystal display device. Similarly, a phase difference correction film 8 and a polarizing film 7 are attached to a rear side of the liquid crystal display device. A driver IC 10 for driving the liquid crystal display device is mounted by COG to the glass substrate 4 through an anisotropic conductive film.

FIG. 3 is a side view showing a structure of a display apparatus according to the present invention. A transparent adhesive 9 bonding the transparent cover plate 1 and the liquid crystal display device together contains no air bubbles. The thickness of the transparent adhesive 9 is 80 to 100 µm in the display portion. The glass substrate 4 to which the driver IC 10 is mounted is warped toward a liquid crystal layer side, and irregularities in applied adhesive amount and in thickness of the transparent cover plate 1 make the thickness of the layer of the transparent adhesive 9 uneven. The layer of the transparent adhesive 9 in an area that overlaps with the ink 2 on the transparent cover plate 1 is thinner by the thickness of the layer of the ink 2. The transparent adhesive 9 in a level difference portion surrounding the polarizing film 6 and the phase difference correction film 5 is thicker by about 150 µm, which is the sum of the thicknesses of the films 5 and 6. After curing, the transparent adhesive 9 has a Shore A hardness of 1 to 5. Curing shrinkage in the level difference portion hardly causes unevenness in images and the like that are displayed. The unevenness in displayed images and the like due to the pushing pressure is barely noticeable. The unevenness in displayed images and the like due to the pushing pressure keeps to substantially the same level when the adhesive thickness in the display portion is 30 to 200 µm.

The transparent adhesive 9 protrudes past the perimeter of the liquid crystal display device by about 0.3 mm or less. The adhesive used for the bonding is a photo-curing adhesive. In the case of an acrylic resin, a visible light-curable adhesive that uses a photoinitiator whose dominant wavelength for curing is 420 nm is preferred. The adhesive cures mostly when the accumulated amount of light transmitted through the acrylic plate reaches 4,500 mJ, and the curing ratio in this case is 85% or higher. In the area of the ink 2, however, the adhesive does not receive direct light and accordingly does not cure under this condition. The transparent adhesive 9 in the area of the ink 2 is cured by irradiating the adhesive directly with light from a side. The curing ratio of the transparent adhesive 9 in the area of the ink 2 thus reaches 80% or so. As a result, a quality free from deterioration with age that makes displayed colors look uneven is obtained. The light cast through the transparent portion and the light cast from a side may be cast simultaneously or separately. The same light source may be used for the former light and the latter light by placing a light reflector such that the light cast through the transparent portion is reflected and irradiating the adhesive from a side.

The transparent cover plate, which, in this embodiment, is made of an acrylic resin, may be a touch panel or a chemically reinforced soda glass plate. The display device may be an organic EL display, an inorganic EL display, an FED, an SED, or a plasma display. The transparent adhesive may be an ultraviolet-curable adhesive instead of a visible light-curable adhesive. Desirably, the transparent adhesive is cured under optimum conditions fit to the light transmittance, which varies depending on the color and thickness of the ink layer.

The present invention ensures high reliability for a display apparatus by making the quality of displayed images and the like uniform and preventing peeling. Also, the display apparatus has almost no adhesive protruding from its designated space and can be reduced in size.

## Claims

1. A display apparatus comprising:
a transparent member;
a display device which has a display portion; and
a transparent adhesive which bonds the transparent member and the display device together,
wherein the transparent adhesive after curing has a Shore A hardness of 1 to 30.

2. A display apparatus according to Claim 1, wherein the transparent adhesive in the display portion is 30 to 200 µm in thickness.

3. A display apparatus according to Claim 1 or 2,
wherein the transparent member is formed with a printed member that blocks light in a perimeter of the transparent member,
wherein the transparent adhesive is a photo-curing adhesive, and
wherein the transparent adhesive cures at different curing ratios in an area of the display portion and an area of the printed member, and the curing ratio in the area of the printed member is 70% or higher.

4. A method of manufacturing a display apparatus comprising:
applying a photo-curing transparent adhesive to at least one of a transparent member and a display device , the transparent member having, on a perimeter thereof, one of a printed member which blocks light and a wiring line;
aligning the transparent member and the display device with respect to each other and bonding the transparent member and the display device; and
curing the photo-curing transparent adhesive in a transparent portion of the transparent member with light that is transmitted through the transparent member, and curing the photo-curing transparent adhesive in the one of the printed member and the wiring line in the perimeter of the transparent member with light that is cast from a side of the transparent member.
